# EUROPEAN PATENT APPLICATION

(11) **EP 3 496 200 A1**
(43) Date of publication of application: **12.06.2019**
(21) Application number: 17836664.7
(22) Date of filing: 05.07.2017
(51) Int. Cl.: H01M 10/04, H01M 2/02, H01M 2/10, H01M 2/18, H01M 4/587, H01M 10/0585

(54) **BATTERY AND BATTERY MODULE**

(30) Priority: 05.08.2016 JP 2016154782
(71) Applicant: NEC Energy Devices, Ltd., Chuo-ku Sagamihara-shi Kanagawa 252-5298 (JP)
(72) Inventor: TAKAHASHI, Hiroo, Sagamihara-shi Kanagawa 252-5298 (JP)
(74) Representative: Glawe, Delfs, Moll
(86) International application number: PCT/JP2017/024595
(87) International publication number: WO 2018/025557

(57) **Abstract**

In order to provide a battery having excellent vibration resistance and shock resistance, the battery according to the present invention includes an electrode laminated body 60 formed by laminating a positive electrode 20, a negative electrode 30, and a separator 40 and a laminate film exterior material 80 that houses the electrode laminated body 60 and an electrolytic solution. The static friction coefficient between the negative electrode 30 and the inner surface of the laminate film exterior material 80 is 0.1 or larger.

## Description

### Technical Field

The present invention relates to a battery such as lithium ion secondary battery and a battery module constituted using the battery.

### Background Art

Recently, as a solution for environmental problems, clean energy which can be obtained by wind power generation, solar power generation, or the like and is applicable for household uses (for detached houses, etc.) or for industrial uses (for transport equipment, construction equipment, etc.) is attracting attention. However, the clean energy has a disadvantage in that output variation is large depending on the situation. For example, energy by the solar power generation can be obtained in the daytime where the sun is shining, while it cannot be obtained at night where the sun is down.

To stabilize the output of the clean energy, a technique that temporarily stores the clean energy in a battery is used. For example, solar energy thus stored in the battery becomes available at night where the sun is down. In general, a zinc battery has been used as a battery for storing the clean energy; however, the zinc battery has a disadvantage in that it is generally large in size and low in energy density.

Thus, recently, a lithium ion secondary battery capable of operating at normal temperature and having a high energy density is attracting attention. In addition to the high energy density, the lithium ion secondary battery has a low impedance and is thus excellent in responsiveness.

For example, as the lithium ion battery, a laminate battery in which a battery element is encapsulated inside a flexible film is known. The laminate battery generally has a flat plate-like shape and has a configuration in which positive and negative electrodes are drawn outside the flexible film.

There is known a technique in which two or more laminate batteries each having the above configuration are modularized by being connected in series and housed in a container (casing) for the purpose of increasing capacity.

For example, Patent Document 1 (Japanese Patent No. 3, 970, 684) discloses a battery module constituted by a battery pack constructed by connecting four sheet-like secondary battery cells in series and a thin rectangular parallelepiped casing that houses the battery pack.

### [Patent Document 1]

Japanese Patent No. 3,970,684

### Disclosure of the Invention

### Problems to be Solved by the Invention

In a battery module as disclosed in Patent Document 1, in which the laminate battery is incorporated in the casing, an electrode laminated body provided in the laminate film is designed to be slightly displaced even though a unit battery is fixed inside the casing by fixing an area around the laminated battery to the casing by bonding or the like, or screw-fixing a lead-out tab of the battery to the casing. Thus, when a long-time vibration or shock is applied to the battery module, the electrode laminated body acts as a pendulum, which may cause breakage of the laminate film and leakage of an electrolyte solution due to the breakage, cause rupture of a member conductively connecting the electrode laminated body and the lead-out tab, or cause rupture of the lead-out tab.

### Means for Solving the Problems

The present invention has been made to solve the above problem, and a battery according to the present invention includes: an electrode laminated body formed by laminating a positive electrode, a negative electrode, and a separator; and a laminate film exterior material that houses the electrode laminated body and an electrolytic solution. The static friction coefficient between the negative electrode and an inner surface of the laminate film exterior material is 0.1 or larger.

Further, in the battery according to the present invention, the D90/D10 ratio of an active material for the negative electrode is 1.7 or higher.

Further, in the battery according to the present invention, the porosity of the separator is 30% or higher.

Further, in the battery according to the present invention, the weight per unit area of the electrode laminated body in the lamination direction is 1 kg/m2 or larger and 40 kg/m2 or smaller.

A battery module according to the present invention is a battery module using the above-described battery. The battery module includes an elastic substance that applies a surface pressure of 100 kgf/m2 or higher in the lamination direction of the electrode laminated body.

Further, in the battery module according to the present invention, the young's modulus of the elastic substance in a direction in which the surface pressure is applied is 0.1 MPa or higher and 5 MPa or lower.

Further, a battery according to the present invention includes: an electrode laminated body formed by laminating a positive electrode, a negative electrode, and a separator; a laminate film exterior material that houses the electrode laminated body and an electrolytic solution; and an elastic layer that can apply a surface pressure in the lamination direction of the electrode laminated body. The static friction coefficient between the negative electrode and an inner surface of the laminate film exterior material is 0.1 or larger.

Further, in the battery according to the present invention, the D90/D10 ratio of an active material for the negative electrode is 1.7 or higher.

Further, in the battery according to the present invention, the porosity of the separator is 30% or higher.

Further, in the battery according to the present invention, the weight per unit area of the electrode laminated body in the lamination direction is 1 kg/m2 or larger and 40 kg/m2 or smaller.

A battery module according to the present invention is a battery module using the above-described battery, wherein the elastic layer applies a surface pressure of 100 kgf/m2 or higher in the lamination direction of the electrode laminated body.

Further, in the battery module according to the present invention, the young's modulus of the elastic layer in a direction in which the surface pressure is applied is 0.1 MPa or higher and 5 MPa or lower.

### Advantageous Effects of the Invention

In the battery according to the present invention, the static friction coefficient between the negative electrode and the inner surface of the laminate film exterior material is 0.1 or larger. Thus, even when a long-time vibration or shock is applied to the battery, the probability of breakage of the laminate film exterior material and leakage of the electrolytic solution associated with the breakage, rapture of a member conductively connecting the electrode laminated body and the lead-out tab, or rapture of the lead-out tab is reduced, whereby the battery having excellent vibration resistance and shock resistance can be provided.

Further, even when a long-time vibration or shock is applied to the battery module according to the present invention, the probability of leakage of the electrolytic solution due to breakage of the laminate film exterior material of the battery, rapture of a member conductively connecting the electrode laminated body and the lead-out tab, or rapture of the lead-out tab is reduced, whereby the battery module having excellent vibration resistance and shock resistance can be provided.

### Brief Description of the Drawings

FIG. 1 is a view for explaining the lamination order of components constituting an electrode laminated body 60;
FIG. 2 is a view illustrating the configuration of the electrode laminated body 60 of a battery 100 according to the embodiment of the present invention;
FIG. 3 is a perspective view of the battery 100 according to the embodiment of the present invention;
FIG. 4 is a view for explaining the lamination order of the components constituting a battery module 300;
FIG. 5 is a perspective view illustrating an example of the battery module 300 according to the embodiment of the present invention;
FIG. 6 is a schematic cross-sectional view of the battery module 300 according to the embodiment of the present invention;
FIG. 7 is a view for explaining the weight per unit area of the electrode laminated body 60 in the lamination direction; and
FIG. 8 is a schematic cross-sectional view of the battery module 300 according to another embodiment of the present invention.

### Best Mode for Carrying Out the Invention

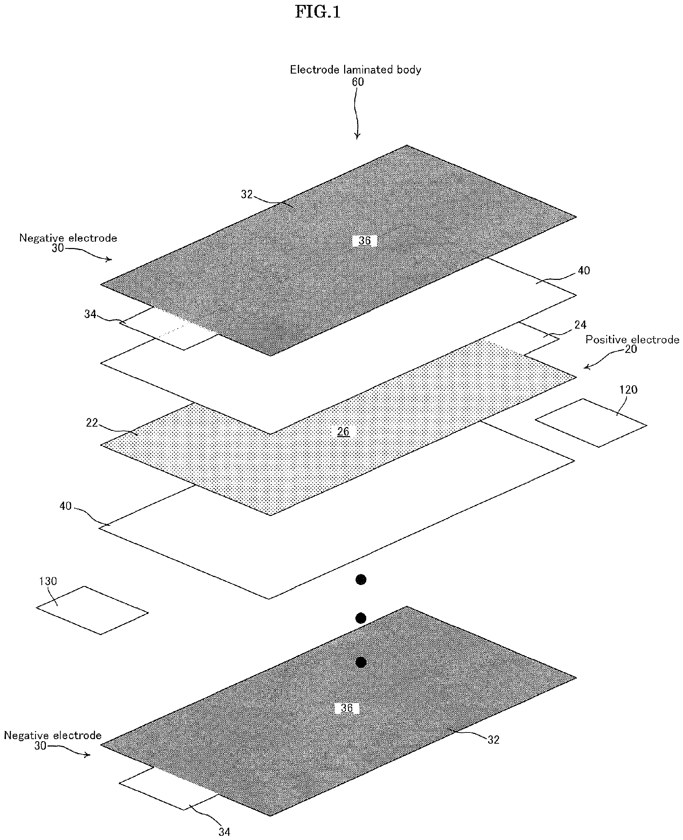

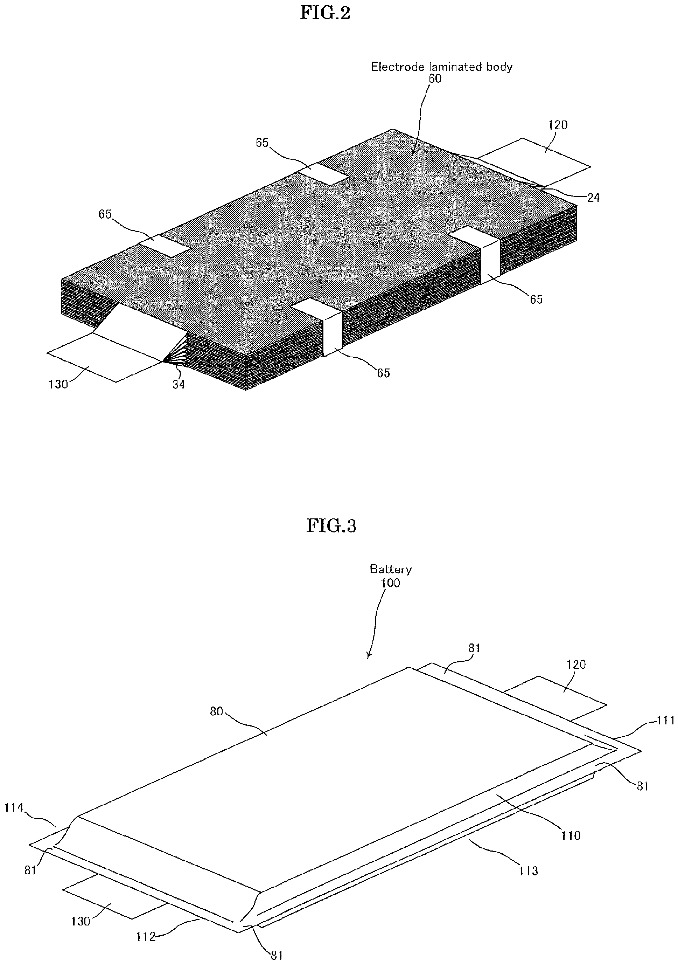

An embodiment of the present invention will be described below with reference to the accompanying drawings. FIG. 1 is a view for explaining the lamination order of components constituting an electrode laminated body 60. FIG. 2 is a view illustrating the configuration of the electrode laminated body 60 of a battery 100 according to the embodiment of the present invention. FIG. 3 is a perspective view of the battery 100 according to the embodiment of the present invention.

In the present embodiment, a lithium ion secondary battery, which is a kind of an electrochemical element, in which lithium ion is moved between negative and positive electrodes to perform charging and discharging, is taken as an example of the battery 100; however, the present invention is also applicable to other kinds of batteries.

The battery 100 according to the embodiment of the present invention has a structure in which an electrode laminated body 60 formed by laminating a plurality of positive electrodes 20 and a plurality of negative electrodes 30 through separators 40, and an electrolytic solution (not illustrated) are housed in a rectangular laminate film exterior material 80.

FIG. 1 is a view for explaining the lamination order of the components constituting the electrode laminated body 60. As illustrated in FIG. 1, the positive electrode 20, negative electrode 30, and separator 40 are used to constitute the electrode laminated body 60.

The positive electrode 20 has a rectangular positive electrode body part 22 and a strip-shaped positive electrode terminal part 24 extending from the positive electrode body part 22. In the positive electrode body part 22, a positive electrode active material 26 such as lithium-cobalt composite oxide is applied onto a sheet-like aluminum plate.

The negative electrode 30 has a rectangular negative electrode body part 32 and a strip-shaped negative electrode terminal part 34 extending from the negative electrode body part 32. In the negative electrode body part 32, a negative electrode active material 36 such as graphite is applied onto a sheet-like nickel plate or a sheet-like copper plate.

The separator 40 is a rectangular sheet-like member such as a micro-porous film, nonwoven fabric or woven fabric, formed from thermoplastic resin such as polyolefin and capable of being impregnated with an electrolytic solution.

When the above-described components are laminated as the electrode laminated body 60, all the positive electrode terminal parts 24 formed in the respective positive electrodes 20 and all the negative electrode terminal parts 34 formed in the respective negative electrodes 30 are fixed to each other by ultrasonic wave welding.

Further, as illustrated in FIG. 2, the negative electrode terminal part 34 of each positive electrode 20 is conductively connected to a positive electrode lead-out tab 120, and the negative electrode terminal part of each negative electrode 30 is conductively connected to a negative electrode lead-out tab 130.

An aluminum plate is used as the positive electrode lead-out tab 120, and a nickel or copper plate is used as the negative electrode lead-out tab 130. When a copper plate is used as the negative electrode lead-out tab 130, nickel plating may be applied onto the surface of the copper plate.

Further, when the above-described components are laminated as the electrode laminated body 60, an adhesive tape 65 is preferably used for fixing at two positions of each of two opposing sides of the electrode laminated body 60 as illustrated in FIG. 2 so as to surely keep the laminated state.

The electrode laminated body 60 formed as illustrated in FIG. 2 and electrolytic solution (not illustrated) are sealed in the laminate film exterior material 80 in a state where the positive electrode lead-out tab 120 and negative electrode lead-out tab 130 are drawn outside, whereby the battery 100 illustrated in FIG. 3 is obtained.

In the present embodiment, the laminate film exterior material 80 includes two laminate films surrounding the electrode laminated body 60 at positions sandwiching the electrode laminated body 60 from both sides in the lamination direction thereof. First sides 111, second sides 112, third sides 113, and fourth sides 114 of the opposing surfaces of the two respective laminate films overlapped around the periphery of the electrode laminated body 60 are thermally welded to form a thermally-welded part (sealed area) 81, whereby the electrode laminated body 60 is sealed together with the electrolytic solution (not illustrated). The positive electrode lead-out tab 120 is drawn from the first side 111 of the laminate film exterior material 80, and the negative electrode lead-out tab 130 is drawn from the second side 112 of the laminate film exterior material 80.

Although two laminate films are used to seal the electrode laminated body 60 and electrolytic solution (not illustrated) in the present embodiment, it is also possible to seal the electrode laminated body 60 and electrolytic solution (not illustrated) by folding one laminate film.

As the laminate film constituting the laminate film exterior material 80, a film commonly used for a film-armored battery of this type can be used as long as it has flexibility and can seal the electrode laminated body 60 and electrolytic solution (not illustrated) so as to prevent leakage of the electrolytic solution.

Examples of a typical layer configuration of the laminate film constituting the laminate film exterior material 80 includes a configuration in which a metal thin film layer and a thermally weldable resin layer are laminated, and a protective resin layer composed of a polyester film such as a polyethylene terephthalate film or a nylon film is laminated on the surface of the metal thin film layer opposite to the thermally weldable resin layer. For sealing the electrode laminated body 60 and electrolytic solution, the thermally weldable resin layers are made to face each other to surround the electrode laminated body 60.

As the metal thin film layer, for example, a metal foil of Al, Ti, Ti alloy, Fe, stainless, or Mg alloy having a thickness of 10 µm to 100 µm can be used.

The resin used for the thermally weldable resin layer is not particularly limited as long as it is thermally weldable and, for example, polypropylene, polyethylene, acid modification thereof, polyphenylene sulfide, polyester such as polyethylene terephthalate, polyamide, ethylene vinyl acetate copolymer can be used. The thickness of the thermally weldable resin layer is preferably 10 µm to 200 µm and more preferably, 30 µm to 100 µm.

The inner surface of the laminate film exterior material 80 is formed as the above-mentioned thermally weldable resin layer of the laminate film exterior material 80. On the other hand, in the electrode laminated body 60, the lamination order is prescribed such that the negative electrode 30 is always positioned at the outermost layer. Therefore, in the battery 100, the negative electrode 30 of the electrode laminated body 60 and the inner surface (thermally weldable resin layer) of the laminate film exterior material 80 are brought into contact with each other.

In the battery 100, in order to prevent the electrode laminated body 60 from being moved inside the laminate film exterior material 80 due to vibration or shock, the static friction coefficient between the negative electrode 30 and the inner surface of the laminate film exterior material 80 needs to be equal to or larger than a predetermined value. The present inventor has experimentally found that the static friction coefficient therebetween is preferably 0.1 or larger.

In order to achieve the above static friction coefficient, the ratio between D90 and D10 is preferably 1.7 or higher with respect to the volume particle size distribution (D) of the negative electrode active material 36. This is because when the D90/D10 ratio is lower than 1.7, the surface of the negative electrode 30 is flat, making it difficult to make the static friction coefficient between the negative electrode 30 and the inner surface of the laminate film exterior material 80 be 0.1 or larger.

Further, the porosity of the separator 40 included in the electrode laminated body 60 is preferably 30% or higher. This is because when the porosity thereof is 30% or higher, the flexibility of the separator 40 is improved to allow the young's modulus to be kept low.

In general, the battery 100 as described above is incorporated in a casing and used as a battery module 300. As such a casing, one constituted by a storage case body 200 and a lid body 210 is taken as an example. Illustration of a configuration related to the electrical connection portion of the positive electrode lead-out tab 120 or negative electrode lead-out tab 130 in the battery module 300 is omitted.

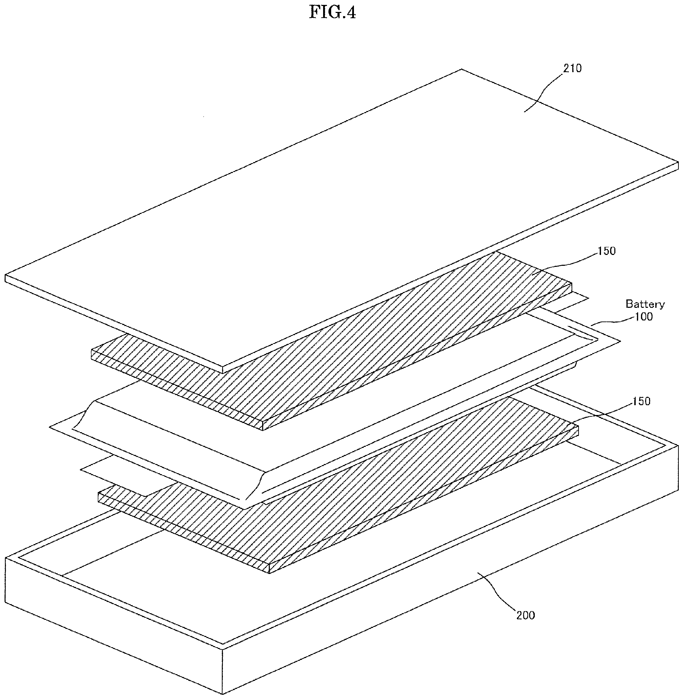

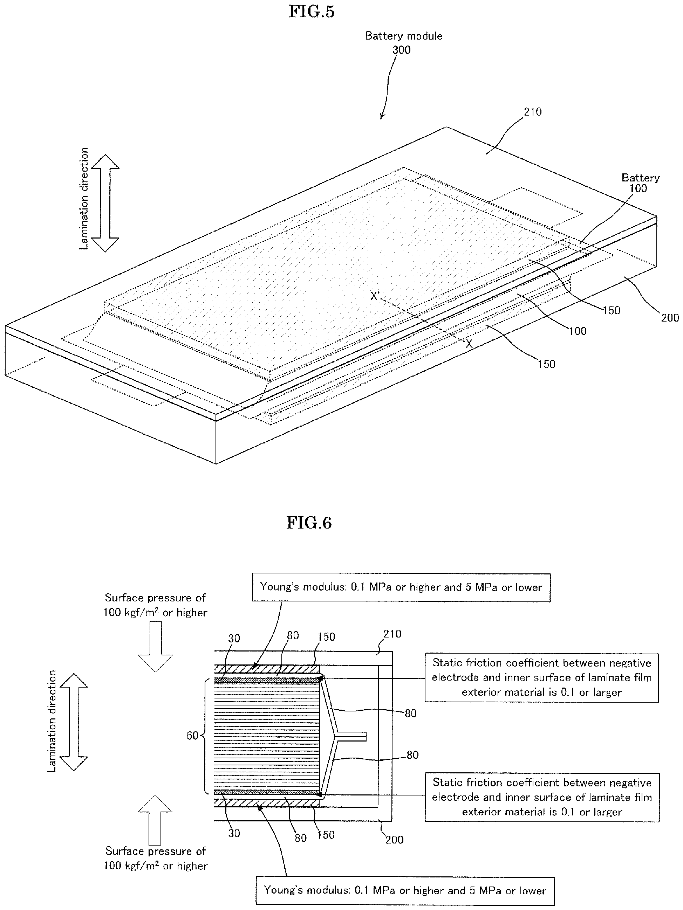

FIG. 4 is a view for explaining the lamination order of the components constituting the battery module 300. FIG. 5 is a perspective view illustrating an example of the battery module 300 according to the embodiment of the present invention. As illustrated, in the present embodiment, the battery 100 is vertically held by elastic substances 150 between the storage case body 200 and the lid body 210.

The material for use in the elastic substance 150 is not particularly limited as long as required elasticity and durability are satisfied. Examples of the material may include a rubber-like polymer such as isoprene rubber, butadiene rubber, chloroprene rubber, nitrile rubber, acrylic rubber, fluororubber, urethane rubber, or silicone rubber, a sponge-like substance obtained by foaming and making porous the above-mentioned rubber-like polymer, and a sponge-like substance obtained by making porous a polymer such as polyolefin or halogenated polyolefin by phase separation, chemical treatment, particle fusion, or fiberization.

FIG. 6 is a schematic cross-sectional view taken along line X-X' of FIG. 5, which illustrates a surface perpendicular to the lamination direction. In FIG. 6, the negative electrode 30 of the outermost layer of the electrode laminated body 60 is highlighted. As described above, in the present invention, the static friction coefficient between the negative electrode 30 and the inner surface of the laminate film exterior material 80 is set to 0.1 or larger.

Further, in order to apply a sufficient load between the negative electrode 30 of the outermost layer of the electrode laminated body 60 and the laminate film exterior material 80, the young's modulus of the elastic substance 150 is set to 0.1 MPa or higher and 5 MPa or lower. As a result, the elastic substance 150 can apply a surface pressure of 100 kgf/m² or higher in the lamination direction of the electrode laminated body 60.

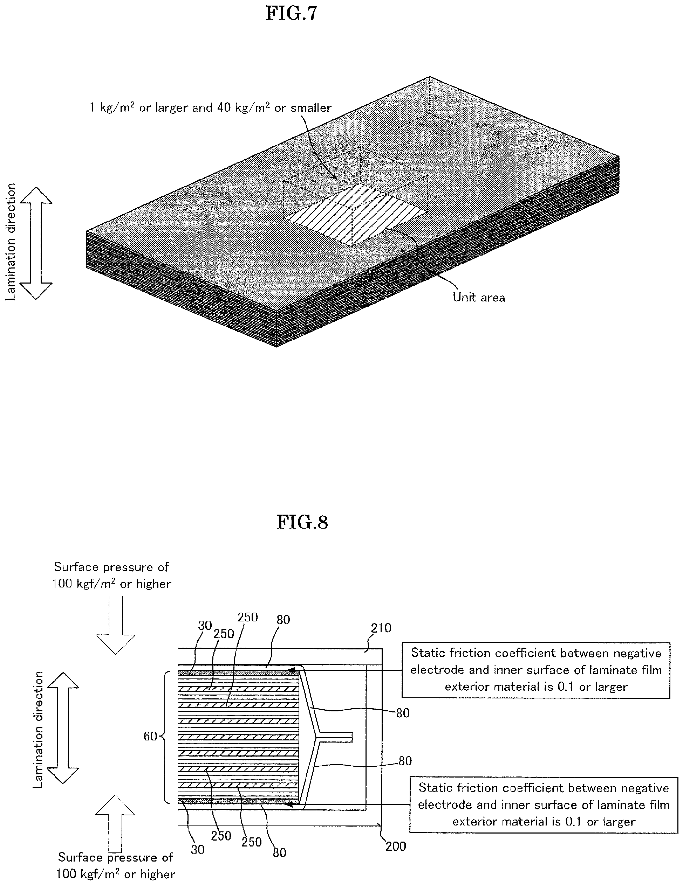

FIG. 7 is a view illustrating the electrode laminated body 60 of the battery 100, which explains the weight per unit area of the electrode laminated body 60 in the lamination direction. In the present invention, the weight per unit area of the electrode laminated body 60 in the lamination direction is set to 1 kg/m² or larger and 40 kg/m² or smaller.

That is, when the weight exceeds 40 kg/m², the entire weight of the electrode laminated body 60 becomes excessively large, failing to prevent the movement of the electrode laminated body 60 by friction force. Conversely, when the weight falls below 1 kg/m², the energy density of the battery 100 is significantly reduced. Therefore, the weight per unit area of the electrode laminated body 60 in the lamination direction is set to 1 kg/m² or larger and 40 kg/m² or smaller.

In the battery 100 according to the present invention, the static friction coefficient between the negative electrode 30 and the inner surface of the laminate film exterior material 80 is set to 0.1 or larger. Thus, even when a long-time vibration or shock is applied to the battery 100 according to the present invention, the probability of breakage of the laminate film exterior material 80 and leakage of the electrolytic solution associated with the breakage, rapture of a member conductively connecting the electrode laminated body 60 and the lead-out tab, or rapture of the lead-out tab is reduced, whereby the battery 100 having excellent vibration resistance and shock resistance can be provided.

Further, even when a long-time vibration or shock is applied to the battery module 300 according to the present invention, the probability of leakage of the electrolytic solution due to breakage of the laminate film exterior material 80 of the battery 100, rapture of a member conductively connecting the electrode laminated body 60 and the lead-out tab, or rapture of the lead-out tab is reduced, whereby the battery module 300 having excellent vibration resistance and shock resistance can be provided.

Next, another embodiment of the present invention will be described. FIG. 8 is a schematic cross-sectional view of the battery module 300 according to another embodiment of the present invention, which corresponds to FIG. 6 of the previous embodiment.

Hereinafter, the difference between the previous and present embodiments will be described. In the previous embodiment, the elastic substance 150 is provided outside the battery 100 so as to apply a sufficient load between the negative electrode 30 of the outermost layer of the electrode laminated body 60 and the inner surface of the laminate film exterior material 80.

On the other hand, in the present embodiment, an elastic layer 250 is provided inside the battery 100 so as to apply a sufficient load between the negative electrode 30 of the outermost layer of the electrode laminated body 60 and the inner surface of the laminate film exterior material 80.

Configurations other than the above difference do not differ between the previous and present embodiments. As illustrated in FIG. 8, in the present embodiment, the elastic layer 250 that can apply a surface pressure in the lamination direction of the electrode laminated body 60 is provided in the electrode laminated body 60.

The material for use in the elastic layer 250 is not particularly limited as long as required physical properties and durability are satisfied. Examples of the material may include a rubber-like polymer such as isoprene rubber, butadiene rubber, chloroprene rubber, nitrile rubber, acrylic rubber, fluororubber, urethane rubber, or silicone rubber, a sponge-like substance obtained by foaming and making porous the above-mentioned rubber-like polymer, and a sponge-like substance obtained by making porous a polymer such as polyolefin or halogenated polyolefin by phase separation, chemical treatment, particle fusion, or fiberization.

The young's modulus of the elastic layer 250 is set to 0.1 MPa or higher and 5 MPa or lower. As a result, the elastic layer 250 can apply a surface pressure of 100 kgf/m² or higher in the lamination direction of the electrode laminated body 60.

The same effects as those obtained in the previous embodiment can be achieved by the battery 100 according to the present embodiment and battery module 300 using the thus configured battery 100.

### Industrial Applicability

There is recently available, for example, a laminate battery in which a battery element is encapsulated inside a flexible film as a lithium ion battery having high energy density. In a battery module in which such a laminate battery is incorporated in the casing, an electrode laminated body provided in the laminate film is designed to be slightly displaced even though a unit battery is fixed inside the casing by fixing an area around the laminated battery to the casing by bonding or the like, or screw-fixing a lead-out tab of the battery to the casing. Thus, when a long-time vibration or shock is applied to the battery module, the electrode laminated body acts as a pendulum, which may cause breakage of the laminate film and leakage of an electrolyte solution due to the breakage, cause rupture of a member conductively connecting the electrode laminated body and the lead-out tab, or cause rupture of the lead-out tab. To cope with this problem, in the battery according to the present invention, the static friction coefficient between the negative electrode and the inner surface of the laminate film exterior material is set to 0.1 or larger. According to the thus configured battery of the present invention, even when a long-time vibration or shock is applied to the battery, the probability of breakage of the laminate film exterior material and leakage of the electrolytic solution associated with the breakage, rapture of a member conductively connecting the electrode laminated body and lead-out tab, or rapture of the lead-out tab is reduced, whereby the battery having excellent vibration resistance and shock resistance can be provided. Thus, industrial applicability is very high.

### Reference Signs List

- 20:: Positive electrode
- 22:: Positive electrode body part
- 24:: Positive electrode terminal part
- 26:: Positive electrode active material
- 30:: Negative electrode
- 32:: Negative electrode body part
- 34:: Negative electrode terminal part
- 36:: Negative electrode active material
- 40:: Separator
- 42:: Separator body part
- 44:: Separator extending piece
- 60:: Electrode limited body
- 65:: Adhesive tape
- 80:: Laminate film exterior material
- 81:: Thermally-welded part (sealed area)
- 100:: Battery
- 110:: Battery body part
- 111:: First side
- 112:: Second side
- 113:: Third side
- 114:: Fourth side
- 120:: Positive electrode lead-out tab
- 130:: Negative electrode lead-out tab
- 150:: Elastic substance
- 200:: Storage case body
- 210:: Lid body
- 250:: Elastic layer
- 300:: Battery module

## Claims

1. A battery **characterized by** comprising:
an electrode laminated body formed by laminating a positive electrode, a negative electrode, and a separator; and
a laminate film exterior material that houses the electrode laminated body and an electrolytic solution, wherein
the static friction coefficient between the negative electrode and an inner surface of the laminate film exterior material is 0.1 or larger.

2. The battery according to claim 1, **characterized in that**
the D90/D10 ratio of an active material for the negative electrode is 1.7 or higher.

3. The battery according to claim 1 or 2 **characterized in that**
the porosity of the separator is 30% or higher.

4. The battery according to any one of claims 1 to 3, **characterized in that**
the weight per unit area of the electrode laminated body in the lamination direction is 1 kg/m² or larger and 40 kg/m² or smaller.

5. A battery module using the battery as claimed in any one of claims 1 to 4, **characterized by** comprising an elastic substance that applies a surface pressure of 100 kgf/m² or higher in the lamination direction of the electrode laminated body.

6. The battery module according to claim 5, **characterized in that**
the young's modulus of the elastic substance in a direction in which the surface pressure is applied is 0.1 MPa or higher and 5 MPa or lower.

7. A battery **characterized by** comprising:
an electrode laminated body formed by laminating a positive electrode, a negative electrode, and a separator;
a laminate film exterior material that houses the electrode laminated body and an electrolytic solution; and
an elastic layer that can applies a surface pressure in the lamination of the electrode laminated body, wherein
the static friction coefficient between the negative electrode and an inner surface of the laminate film exterior material is 0.1 or larger.

8. The battery according to claim 7, **characterized in that**
the D90/D10 ratio of an active material for the negative electrode is 1.7 or higher.

9. The battery according to claim 7 or 8 **characterized in that**
the porosity of the separator is 30% or higher.

10. The battery according to any one of claims 7 to 9, **characterized in that**
the weight per unit area of the electrode laminated body in the lamination direction is 1 kg/m² or larger and 40 kg/m² or smaller.

11. A battery module using the battery as claimed in any one of claims 7 to 10, **characterized in that**
the elastic layer applies a surface pressure of 100 kgf/m² or higher in the lamination direction of the electrode laminated body.

12. The battery module according to claim 11, **characterized in that**
the young's modulus of the elastic layer in a direction in which the surface pressure is applied is 0.1 MPa or higher and 5 MPa or lower.
